# EUROPÄISCHE PATENTSCHRIFT

(11) **EP 1 558 965 B1**
(45) Veröffentlichungstag und Bekanntmachung des Hinweises auf die Patenterteilung: **23.07.2008**
(21) Anmeldenummer: 03810420.4
(22) Anmeldetag: 30.10.2003
(51) Int. Cl.: G02F 1/1333, G02F 1/1343, G02F 1/07

(54) **ELEKTROOPTISCHES LICHTSTEUERELEMENT UND ANZEIGE MIT STEUERMEDIUM MIT OPTISCH ISOTROPER PHASE**
ELECTRO-OPTICAL LIGHT CONTROL ELEMENT AND DISPLAY HAVING A CONTROL MEDIUM WITH AN OPTICALLY ISOTROPIC PHASE
ELEMENT MODULATEUR DE LUMIERE ELECTRO-OPTIQUE ET AFFICHAGE COMPORTANT UN AGENT MODULATEUR A PHASE ISOTROPE OPTIQUE

(30) Priorität: 07.11.2002 DE 10252250
(43) Veröffentlichungstag der Anmeldung: 03.08.2005
(73) Patentinhaber: Merck Patent GmbH, 64293 Darmstadt (DE)
(72) Erfinder: HECKMEIER, Michael, 69502 Hemsbach (DE); CZANTA, Markus, 64289 Darmstadt (DE); GÖTZ, Achim, 64665 Alsbach-Hähnlein (DE)
(86) Internationale Anmeldenummer: PCT/EP2003/012082
(87) Internationale Veröffentlichungsnummer: WO 2004/042460

(56) Entgegenhaltungen:
- WO-A-02/093244
- DE-A- 3 425 584
- US-B1- 6 266 109

## Beschreibung

### Gebiet der Erfindung

Die vorliegende Erfindung betrifft Lichtsteuerelemente, diese enthaltende Anzeigen und Anzeigesysteme. Die Lichtsteuerelemente verwenden bevorzugt Steuermedien die bei bestimmten Temperaturen anisotrope Eigenschaften aufweisen, wie z. B. Flüssigkristalle. Die Lichtsteuerelemente werden bei einer Temperatur betrieben, bei der die Steuermedien in einer optisch isotropen Phase, bevorzugt in der isotropen Phase oder in einer Blauen Phase, besonders bevorzugt in einer Blauen Phase, vorliegen. Derartige Anzeigen sind in DE 102 17 273 und DE 102 41 301 vom 04.09.2002 (einer weiteren bislang unveröffentlichten Patentanmeldungen der Anmelderin der vorliegenden Anmeldung) beschrieben.

Die Merkmale des Oberbegriffs von Anspruch 1 sind aus US 6 266 109 B bekannt.

Die vorliegende Erfindung betrifft ein elektrooptisches Lichtsteuerelement, sowie solche Elemente enthaltende elektrooptische Anzeigen und Anzeigesysteme wie Fernsehbildschirme, Computermonitore und ähnliche. Die erfindungsgemäßen Lichtsteuerelemente enthalten ein mesogenes Steuermedium, das beim Betrieb der Lichtsteuerelemente in der optisch isotropen Phase vorliegt. Sie sind neben einem guten Kontrast und einer geringen Blickwinkelabhängigkeit des Kontrasts besonders durch sehr kurze Schaltzeiten, insbesondere zur Darstellung bewegter Bilder, wie z.B. bei Fernseh- oder Monitoranwendungen, bei gleichzeitig relativ niedriger Betriebsspannung ausgezeichnet.

Insbesondere betrifft die vorliegende Erfindung elektrooptische Lichtsteuerelemente, sowie solche Elemente enthaltende elektrooptische Anzeigen und Anzeigesysteme die eine verbesserte Zuverlässigkeit aufweisen.

### Aufgabe und Stand der Technik

Konventionelle elektrooptischen Flüssigkristallanzeigen sind allgemein bekannt. Sie werden bei einer Temperatur betrieben, bei der sich das Steuermedium in einer, in der Regel optisch anisotropen, Mesophase befindet. Bei den meisten Anzeigetypen werden die Steuermedien in der nematischen Phase verwendet. In der Mesophase haben die Steuermedien bereits anisotrope Eigenschaften, wie zum Beispiel eine Doppelbrechung (Δn). Diese anisotropen Eigenschaften werden nicht erst durch ein elektrisches Feld induziert. Am weitesten verbreitet sind TN-(Englisch: "twisted nematic") und STN- (Englisch: "super twisted nematic") Anzeigen. Die Flüssigkristallzellen dieser Anzeigen haben Elektroden auf den Substraten auf den beiden einander gegenüberliegenden Seiten des Flüssigkristallmediums. Somit ist das elektrische Feld im wesentlichen vertikal zur Flüssigkristallschicht. Insbesondere die zuerst genannten Anzeigen werden in Kombination mit einer TFT Ansteuerung (Englisch: "thin film transistor") für Anzeigen mit großem Informationsgehalt und großer Auflösung verwendet. So zum Beispiel in "lap-top" und "note-book" Computern. Insbesondere bei "desk-top" Computermonitoren werden in neuerer Zeit zunehmend Flüssigkristallanzeigen des IPS- (Englisch: "inplane switching", z. B. DE 40 00 451 und EP 0 588 568) oder alternativ des VAN- (Englisch: "vertically aligned nematic") Typs verwendet. VAN-Anzeigen sind eine Variante der ECB- (Englisch: "electrically controlled birefringence") Anzeigen. In einer modernen Variante den MVA-Anzeigen (Englisch: "multi domain vertically aligned") werden pro angesteuerter Elektrode mehrere Domänen stabilisiert und zusätzlich wird eine spezielle optische Kompensationsschicht verwendet. Diese Anzeigen verwenden, wie die bereits erwähnten TN-Anzeigen, ein zur Flüssigkristallschicht vertikales elektrisches Feld. Im Gegensatz hierzu verwenden IPS-Anzeigen in der Regel Elektroden auf nur einem Substrat, also an einer Seite der Flüssigkristallschicht, sind also durch eine wesentliche Komponente des elektrischen Felds parallel zur Flüssigkristallschicht gekennzeichnet.

Allen diesen konventionellen Anzeigen ist ein relativ langsames Schalten gemein, insbesondere ist dieses für die immer stärkere Verbreitung findenden TV- und Multi-Media-Anwendungen nicht ausreichend. Dieses fällt insbesondere im Vergleich mit den nahezu ubiquitären Kathodenstrahlröhren auf. Ein weiterer Nachteil der bekannten, in Flüssigkristallanzeigen eingesetzten elektro-optischen Effekte ist die deutliche Blickwinkelabhängigkeit des erzielten Kontrasts. Diese ist in den meisten Fällen so groß, daß für Anzeigen im Direktsichtbetrieb Kompensationsschichten, typischerweise anisotrope Filme, mit zum Teil kompliziertem Aufbau, verwendet werden müssen.

In den DE 10217273 und DE 102 41 301 werden Lichtsteuerelemente beschrieben, bei denen das mesogene Steuermedium bei der Betriebstemperatur in der isotropen Phase vorliegt. Diese Lichtsteuerelemente schalten besonders schnell und haben eine gute Blickwinkelabhängigkeit des Kontrasts. Allerdings ist die Zuverlässigkeit dieser Anzeigen bei längerem Betrieb für einige Anwendungen nicht ausreichend. So ist die elektrische Leitfähigkeit oft zu groß. Für die Ansteuerung mit einer Matrix von TFTs ist eine hohe "voltage holding ratio" erforderlich. Diese kann bei einigen der neuen Lichtsteuerelemente nur durch den Einsatz von Speicherkondensatoren (bzw. Speicherkapazitäten) erreicht werden. Diese benötigen jedoch meist weitere Prozeßschritte bei der Herstellung der aktiven Substrate und führen in der Regel zu einer Verringerung des Anteils der für den elektrooptischen Effekt nutzbaren Fläche. Der oft unerwünscht hohe Stromfluss durch die Lichtsteuerelemente führt zu einer niedrigen "voltage holding ratio" und somit zu einem unerwünschten Energieverbrauch. Ferner treten an den Kanten und besonders an den Ecken der Elektrodenstruktur unerwünschte Effekte auf. Hier treten Änderungen des Kontrasts auf, die, insbesondere mit zunehmender Betriebsdauer, zu einer Verschlechterung des Kontrasts der Lichtsteuerelemente führen können. Die beschriebenen Effekte begrenzen die Einsatzmöglichkeiten der neuen Lichtsteuerelemente und führen zu kurzen Lebensdauern der entsprechenden Anzeigen, insbesondere unter Belastungen wie erhöhter Temperatur oder elektromagnetischer Strahlung, insbesondere starkem sichtbaren Licht oder UV-Strahlung.

Eine Verringerung der Konzentration von stark polaren Verbindungen in den Steuermedien kann zu einer Verringerung der oben beschriebenen unerwünschten Effekte führen. Da die neuen elektrooptischen Ansteuer elemente relativ hohe Ansteuerspannungen benötigen, die bei eingeschränkter Verwendung von stark polaren Verbindungen sogar noch ansteigen würden ist diese Möglichkeit in der Regel nicht besonders vorteilhaft.

Der vorliegenden Erfindung lag die Aufgabe zugrunde besonders schnell schaltende Lichtsteuerelemente mit geringer Blickwinkelabhängigkeit und insbesondere mit niedrigen Ansteuerspannungen zu realisieren. Diese Lichtsteuerelemente sollen eine Schichtdicke der Steuermedien in der Größenordnung einiger µm aufweisen. Sie sollen als Elemente von FPDs (Englisch: "flat panel displays", also flachen Anzeigen), wie zum Beispiel Flachbildschirmen für Computer, eingesetzt werden. Ferner sollen die Lichtsteuetelemente sie mittels einer möglichst einfachen Elektrodenkonfiguration ansteuerbar sein und eine niedrige Betriebsspannung aufweisen. Darüber hinaus sollen sie für die Anwendung in elektro-optischen Anzeigen einen guten Kontrast mit einer geringen Blickwinkelabhängigkeit haben und insbesondere sollte ihre Zuverlässigkeit, wie die Lebensdauer auch unter Belastung und bei breitem Arbeitstemperaturbereich besonders gut sein.

Somit besteht der Bedarf nach verbesserten Lichtsteuerelementen insbesondere mit verbesserter Zuverlässigkeit.

### Vorliegende Erfindung

Überraschend wurde gefunden, dass, wie im Folgenden beschrieben, Lichtsteuerelemente die ein mesogenes Steuermedium verwenden, das bei der Betriebstemperatur in einer optisch isotropen Phase vorliegt, mit einer guten Zuverlässigkeit erhalten werden können.

Die elektrooptischen Lichtsteuerelemente gemäß der vorliegenden Erfindung umfassen
- ein Substrat oder mehrere Substrate,
- eine Elektrodenanordnung,
- mindestens ein Element oder mehrere Elemente zur Polarisation des Lichts und
- ein Steuermedium,
   und sind dadurch gekennzeichnet, dass
- das Lichtsteuerelement bei einer Temperatur betrieben wird, bei der das Steuermedium im nicht angesteuerten Zustand in einer optisch isotropen Phase vorliegt und dass
- die Elektrodenanordnung ein elektrisches Feld mit einer signifikanten Komponente parallel zur Fläche des mesogenen Steuermediums erzeugen kann und dass
- das Lichtsteuerelement eine feste dielektrische Schicht zwischen der Elektrodenanordnung und der mesogenen Steuerschicht umfaßt.

Die feste dielektrische Schicht ist in der Regel ein Isolator oder eine ähnliche Schicht mit einem großen elektrischen Widerstand.

Die optisch isotrope Phase in der sich das Steuermedium bei der Betriebstemperatur des Lichtsteuerelements befindet kann eine echte (homogene) Phase, wie z.B. die isotrope Phase des Mediums oder eine Blaue Phase oder auch eine inhomogene, sogenannte Scheinphase sein, wie zum Beispiel das Medium eines PDLC (Englisch "polymer dispersed liquid crystal) Systems mit einer Tröpfchengröße, die so gering ist, dass das System optisch isotrop ist. An Stelle von PDLCs kommen auch Polymernetzwerke (kurz PN von Englisch "polymer network") Systeme in Betracht, bei denen der Flüssigkristall in einer kontinuierlichen Phase vorliegt, solange die charakteristischen Strukturen klein genug sind, dass das System optisch isotrop ist. Hierzu ist, wie bei den PDLCs der Durchmesser der charakteristischen Strukturen bevorzugt kleiner als die Wellenlänge des verwendeten Lichts.

Bevorzugt wird ein Steuermedium mit einer homogenen Phase verwendet.

In einer bevorzugten Ausführungsform der vorliegenden Erfindung liegt das Steuermedium des Lichtsteuerelements bei der Betriebstemperatur, bzw. bei mindestens einer der Betriebstemperaturen in der isotropen Phase vor.

In einer weiteren bevorzugten Ausführungsform der vorliegenden Erfindung liegt das Steuermedium des Lichtsteuerelements bei der Betriebstemperatur, bzw. bei mindestens einer der Betriebstemperaturen in einer Blauen Phase vor. In dieser Ausführungsform kann sich der Betriebstemperaturbereich über die Blaue Phase und darüber hinaus oder beim Auftreten mehrerer Blauer Phasen über deren Bereich und darüber hinaus bis in die isotrope Phase erstrecken.

Flüssigkristalle mit entsprechend starker chiraler Verdrillung können eine oder mehrere optisch isotrope Mesophasen aufweisen. Diese Phasen erscheinen bei entsprechendem cholesterischen Pitch, in einer ausreichend großen Schichtdicke leicht bläulich. Aus diesem Grund werden sie als Blaue Phasen bezeichnet (Gray and Goodby, "Smectic Liquid Crystals, Textures and Structures", Leonhard Hill, USA, Canada (1984)).

Die Effekte elektrischer Felder auf Flüssigkristalle, die in einer Blauen Phase vorliegen, werden beispielsweise in H.S. Kitzerow, "The Effect of Electric Fields on Blue Phases", Mol. Cryst. Liq. Cryst, (1991), Bd. 202, S. 51-83 beschrieben. Dort werden auch die bislang identifizierten drei Arten Blauer Phasen (BP I bis BP III) erwähnt, die in feldfreien Flüssigkristallen beobachtet werden können. Es werden jedoch keine elektrooptischen Anzeigen, die eine feldinduzierte Doppelbrechung ausnutzen, beschrieben. Unter dem Einfluss eines elektrischen Feldes können weitere Blaue Phasen oder andere Phasen auftreten, die von den Blauen Phasen I, II und III verschieden sind.

Ein wesentlicher Aspekt der vorliegenden Erfindung besteht im Vorhandensein der festen dielektrischen Schicht zwischen der Elektrodenanordnung und der mesogenen Steuerschicht und in ihrer Ausgestaltung. Die feste dielektrische Schicht zwischen der Elektrodenanordnung und der mesogenen Steuerschicht der erfindungsgemäßen Lichtsteuerelemente kann aus bekannten festen anorganischen oder polymeren organischen Dielektrika bestehen. Die feste dielektrische Schicht ist eine elektrisch isolierenden Schicht. Bevorzugt sind Schichten aus SiO₂, SiO_{X}, Siliziumnitrid, Siliziumkarbid oder dergleichen, ganz besonders bevorzugt aus SiO₂ oder SiO_{X}.

Diese feste dielektrische Schicht kann mittels bekannter Verfahren, wie z.B. Sputtern oder Aufdampfen, hergestellt werden.

Hierbei kann es vorteilhaft sein die feste dielektrische Schicht in einem gemeinsamen Prozeßschritt bei der Herstellung einer der Schichten der elektrisch nichtlinearen Elemente der Aktiven Matrizen z.B. der TFTs herzustellen. Hierbei bietet sich insbesondere die oberste Schicht dieser TFTs oder deren "Top coat" an. Es können jedoch auch übliche Planarisierungsschichten verwendet werden.

Die Schichtdicke der festen dielektrischen Schicht sollte ausreichend groß sein um den erwünschten Effekt der Passivierung zu erzielen, sie sollte jedoch nicht zu groß gewählt werden um die effektive Spannung für den elektrooptischen Effekt nicht zu sehr zu erniedrigen. Bevorzugt sollte die Schichtdicke der festen dielektrischen Schicht nicht mehr als 90% der Dicke des mesogenen Steuermediums betragen. Als besonders günstig hat sich eine Schichtdicke der dielektrischen Schicht im Bereich von 2 nm bis 5 µm, bevorzugt im Bereich von 10 nm bis 1 µm und besonders bevorzugt im Bereich von 50 nm bis 500 nm erwiesen.

Die feste dielektrische Schicht kann sich kontinuierlich über die gesamte Fläche des Lichtsteuerelements erstrecken. Sie kann jedoch in einigen Fällen auch zweckmäßigerweise strukturiert sein und sich nur über Teile der Fläche des Lichtsteuerelements erstrecken. Die feste dielektrische Schicht bedeckt die Elektrodenstruktur mindestens teilweise, besonders bevorzugt bedeckt sie insbesondere die Ecken und/oder Kanten der Elektroden im wesentlichen vollständig, an denen die Kontraständerungen, insbesondere unter Belastung, in der Regel zuerst beobachtet werden.

In einer bevorzugten Ausführungsform der vorliegenden Erfindung ist die Elektrodenanordnung so gestaltet, dass mindestens eine der vier folgenden Bedingungen erfüllt ist
- die in der Ebene der Steuerschicht einander benachbarten elektrisch leitfähigen Schichten haben einen Abstand von 10 µm oder weniger voneinander,
- die leitfähige Schicht oder, wenn mehrere der elektrisch der leitfähigen Schichten vorhanden sind, eine dieser Schichten der Elektrodenstruktur ist erhaben oder mehrere dieser Schichten der Elektrodenstruktur sind erhaben,
- die Elektrodenstruktur umfaßt jeweils zwei oder mehrere Schichten die einander überlagern, elektrisch leitend miteinander verbunden sind und gleichzeitig über wesentliche Teile ihrer Fläche voneinander durch eine dielektrische Schicht getrennt sind,
- die elektrisch leitfähige Schicht oder, wenn mehrere der elektrisch der leitfähigen Schichten vorhanden sind, eine oder mehrere der leitfähigen Schichten der Elektrodenstruktur ist bzw. sind durch eine feste dielektrische Schicht vom jeweiligen darunterliegenden Substrat getrennt.

Neben der niedrigen Ansteuerspannung, dem guten Kontrast dieser Anzeigen mit besonders geringer Blickwinkelabhängigkeit und sehr kurzen Schaltzeiten ist ihre Zuverlässigkeit hervorragend.

Im Folgenden wird die vorliegende Erfindung näher erläutert.

Bevorzugt wird als Steuermedium des Lichtsteuerelements ein mesogenes Medium verwendet. Als mesogene Medien werden in der vorliegenden Anmeldung Medien bezeichnet, die eine Mesophase aufweisen, die in einer Mesophase löslich sind ohne deren Phasenbereich besonders stark zu verschmälern oder die eine Mesophase induzieren. Die Mesophase ist eine smektische Phase oder eine nematische Phase, bevorzugt eine nematische Phase.

Als bevorzugtes Medium zur Untersuchung der mesogenen Eigenschaften der Verbindungen, Komponenten oder Medien, die selbst keine Mesophase aufweisen, wird die nematische Mischung ZLI-4792 der Merck KGaA, Darmstadt, Deutschland verwendet. Bevorzugt haben die mesogenen Verbindungen, Komponenten oder Medien einen aus 10%-iger Lösung in dieser Mischung extrapolierten Klärpunkt von -100°C oder mehr, besonders bevorzugt von -50°C oder mehr und ganz besonders bevorzugt von -20°C oder mehr.

Die erfindungsgemäßen Lichtsteuerelemente enthalten bevorzugt ein mesogenes Medium, das bei Betriebstemperatur in einer optisch isotropen Phase vorliegt. Dieses Medium befindet sich zweckmäßiger Weise auf bzw. unter einem Substrat.

In der Regel befindet sich das Steuermedium zwischen zwei Substraten. Diese Ausführungsform ist bevorzugt. Wenn sich das Steuermedium zwischen zwei Substraten befindet ist mindestens eines dieser Substrate lichtdurchlässig. Das lichtdurchlässige Substrat, bzw. die lichtdurchlässigen Substrate können z. B. aus Glas, Quarz oder Kunststoff bestehen. Wird ein Substrat verwendet, das nicht lichtdurchlässig ist, so kann dies unter anderem aus einem Metall oder einem Halbleiter bestehen. Diese Medien können als solche verwendet werden oder auf einem Träger, z.B. einer Keramik, vorliegen. Ist das Steuermedium ein polymeres Medium so kann gegebenenfalls auf die Verwendung eines zweiten Substrats verzichtet werden. Polymere Steuermedium können sogar selbsttragend ausgeführt werden. In diesem Fall wird gar kein Substrat benötigt.

Die Betriebstemperatur des Lichtsteuerelements liegt bevorzugt oberhalb der Übergangstemperatur des Steuermediums zur optisch isotropen Phase, in der Regel im Bereich von 0,1° bis 50° oberhalb dieser Übergangstemperatur, bevorzugt im Bereich von 0,1° bis 10° oberhalb dieser Übergangstemperatur und besonders bevorzugt im Bereich von 0,1° bis 5° oberhalb dieser Übergangstemperatur.

Bei Anlegen einer Spannung wird in dem mesogenen Medium in der optisch isotropen Phase eine Orientierung induziert, welche zu einer optischen Verzögerung führt, die auf bekannte Weise visualisiert werden kann. Bevorzugt wird ein inhomogenes elektrisches Feld angewendet.

Die erfindungsgemäßen Lichtsteuerelemente enthalten mindestens ein Element zur Polarisierung des Lichts. Zusätzlich enthalten sie bevorzugt ein weiteres optisches Element. Dieses weitere optische Element ist entweder ein zweites Element zur Polarisation des Lichts, ein Reflektor oder ein Transflektor.

Die optischen Elemente sind so angeordnet, dass das Licht beim Durchgang durch das mesogene Medium des Lichtsteuerelements sowohl vor dem Eintritt in das mesogene Medium, als auch nach dem Austritt aus dem mesogenen Medium mindestens einmal mindestens ein polarisierendes Element durchläuft.

In einer bevorzugten Ausführungsform des Lichtsteuerelements gemäß der vorliegenden Erfindung befindet sich das mesogene Medium zwischen zwei Polarisatoren, also einem Polarisator und einem Analysator. Bevorzugt werden zwei Linearpolarisatoren verwendet. In dieser Ausführurigsform sind die Absorptionsachsen der Polarisatoren bevorzugt gekreuzt und bilden bevorzugt einen Winkel von im wesentlichen 90°.

Optional enthält das erfindungsgemäße Lichtsteuerelement eine oder mehrere doppelbrechende Schichten. Bevorzugt enthält es eine λ/4-Schicht oder mehrere λ/4-Schichten, bevorzugt eine λ/4-Schicht. Die optische Verzögerung der λ/4-Schicht beträgt bevorzugt ca. 140 nm.

Die Schichtdicke (d) des mesogenen Steuermediums beträgt bevorzugt 0,1 µm bis 5.000 µm (i.e. 5 mm), besonders bevorzugt 0,5 µm bis 1.000 µm (i.e. 1 mm), besonders bevorzugt 1,0 µm bis 100 µm und ganz besonders bevorzugt 3,0 µm bis 30 µm und insbesondere 3,5 µm bis 20 µm. In einer bevorzugten Ausführungsform beträgt die Schichtdicke des mesogenen Steuermediums bevorzugt 0,5 µm bis 50 µm, besonders bevorzugt 1,0 µm bis 20 µm und ganz besonders bevorzugt 1,0 µm bis 8,0 µm.

Gegenstand der vorliegenden Erfindung sind auch elektrooptische Anzeigen, die ein oder mehrere erfindungsgemäße Lichtsteuerelemente enthalten. Bevorzugt werden diese elektrooptischen Anzeigen mittels einer aktiven Matrix angesteuert.

Gegenstand der vorliegenden Erfindung sind des weiteren elektrooptische Anzeigesysteme enthaltend eine oder mehrere erfindungsgemäße elektrooptische Anzeigen. Diese elektrooptische Anzeigesysteme werden bevorzugt zur Darstellung von Information, unter anderem, bevorzugt als Fernsehbildschirm oder als Computermonitor verwendet. Bei der darzustellenden Information handelt es sich bevorzugt um digitale Signale oder um Videosignale.

Das erfindungsgemäße Lichtsteuerelement kann zusätzlich ein oder mehrere weitere übliche optische Elemente wie doppelbrechende Schichten (z.B. Kompensationsschichten), Diffusorschichten, und Elemente zur Erhöhung der Helligkeit und/oder der Lichtausbeute und/oder der Blickwinkelabhängigkeit enthalten, wobei diese Aufzählung nicht abschließend ist.

Die erfindungsgemäßen Lichtsteuerelemente sind durch einen guten Kontrast gekennzeichnet, der stark und nahezu überwiegend von den Eigenschaften der verwendeten Polarisatoren abhängt. Zum Vergleich mit herkömmlichen TN-Zellen werden hier TN-Zellen mit einer optischen Verzögerung von 0,50 µm, positivem Kontrast und der Absorptionsachse der Polarisatoren senkrecht zu der Vorzugsorientierung der nematischen Flüssigkristalle am benachbarten Substrat, die nicht chirale Flüssigkristalle enthalten, herangezogen. Werden bei den erfindungsgemäßen Lichtsteuerelemeriten und bei diesen herkömmlichen TN-Zellen die gleichen Polarisatoren verwendet, ist der Kontrast der erfindungsgemäßen Lichtsteuerelemente um 40% oder mehr größer als der der TN-Zellen.

Die Blickwinkelabhängigkeit des Kontrasts der erfindungsgemäßen Lichtsteuerelemente ist sehr gut. Sie ist deutlich besser als die der bekannten ECB-Zellen. Sie ist eher vergleichbar mit der bei den kommerziell verfügbaren IPS-Anzeigen (z.B. von Hitachi und NEC, beide Japan) und MVA-Anzeigen (z.B. von Fujitsu, Japan) beobachteten Blickwinkelabhängigkeit. Sie ist viel geringer als die der konventionellen TN-Anzeigen. So schließt eine Isokontrastkurve eines gegebenen Kontrastverhältnisses bei den erfindungsgemäßen Lichtsteuerelementen in der Regel einen Winkelbereich ein, der mehr als doppelt so groß, oft sogar mehr als dreimal so groß ist wie die entsprechende Isokontrastkurve für das gleiche Kontrastverhältnis bei der TN-Anzeige.

Die Schaltzeiten der erfindungsgemäßen Lichtsteuerelemente sind sehr klein. Sie liegen in der Regel bei Werten von 5 ms oder weniger, bevorzugt bei 1 ms oder weniger, bevorzugt bei 0,5 ms oder weniger besonders bevorzugt bei 0,1 ms oder weniger.

Besonders vorteilhaft ist die Tatsache , dass beim Schalten zwischen verschiedenen Graustufen sowohl die Schaltzeit für das Ausschalten, als auch, besonders überraschend, die für das Einschalten nahezu unabhängig von der verwendeten Ansteuerspannung sind. Dies stellt einen wesentlichen Vorteil gegenüber herkömmlichen Lichtsteuerelementen wie Flüssigkristallzellen, z.B. TN-Zellen, dar.

Zur Untersuchung des Schaltverhaltens bei der Ansteuerung von Graustufen wurden die erfindungsgemäßen Lichtsteuerelemente jeweils mitverschiedenen Ansteuerspannungen geschaltet. Dabei wurden charakteristische Spannungen der elektrooptischen Kennlinie als Endpunkte gewählt, z.B. V₁₀, V₂₀, V₃₀, ... bis V₉₀. Dann wurde von einer gegebenen charakteristischen Spannung auf die anderen Spannungen und zurück geschaltet, z.B. von V₁₀ auf jede der Spannungen V₉₀, V₈₀, V₇₀ bis V₂₀. Als nächstes wurde eine andere der charakteristischen Spannungen gewählt und von dieser auf jeder der höheren charakteristischen Spannungen und zurück geschaltet, z.B. von V₂₀ auf jede der Spannungen V₉₀, V₈₀, V₇₀ bis V₃₀ und so weiter bis zur Ausgangsspannung V₈₀ von der auf V₉₀ und zurück geschaltet wird. Bei den Lichtsteuerelementen gemäß der vorliegenden Erfindung ist in allen diesen Fällen die Einschaltzeit vom Zeitpunkt des Einschaltens der neuen Spannung bis zum Erreichen von 90% der jeweiligen maximalen Transmissionsänderung für alle diese Schaltvorgänge in erster Näherung identisch.

Elektrooptische Anzeigen gemäß der vorliegenden Erfindung enthalten ein oder mehrere erfindungsgemäße Lichtsteuerelemente. Diese werden in einer bevorzugten Ausführungsform mittels einer Aktiven Matrix angesteuert.

In einer anderen bevorzugten Ausführungsform werden die erfindungsgemäßen Lichtsteuerelemente im sogenannten "field sequential mode" angesteuert. Hierbei werden die Schaltelemente synchron zur Ansteuerung nacheinander mit verschieden farbigem Licht beleuchtet. Zur Erzeugung des gepulsten farbigen Lichts können beispielsweise ein Farbrad ("color wheel"), Stroboskoplampen oder Blitzlampen eingesetzt werden.

Elektrooptische Anzeigen gemäß der vorliegenden Erfindung können, insbesondere wenn sie für Fernsehbildschirme, Computermonitore oder ähnliches verwendet werden, zur Darstellung farbiger Bilder einen Farbfilter enthalten. Dieser Farbfilter besteht zweckmäßiger Weise aus einem Mosaik von Filterelementen verschiedener Farben. Hierbei ist typischer Weise jedem elektro-optischen Schaltelement ein Element des Farbfiltermosaiks einer Farbe zugeordnet.

Die erfindungsgemäßen Lichtsteuerelemente enthalten eine Elektrodenstruktur die ein elektrisches Feld mit einer signifikanten Komponente parallel zum Substrat, also auch parallel zur Schicht des mesogenen Mediums, erzeugt. Als Fläche des Steuermediums wird in diesem Zusammenhang die Fläche der hauptsächlichen Ausdehnung des Steuermediums verstanden, die in der Regel mit der Anzeigefläche übereinstimmt.

Die verwendeten Substrate können planar sein oder gewölbt, bevorzugt sind sie planar.

Die Elektrodenstruktur kann in der Form von interdigitalen Elektroden ausgeführt sein. Sie kann in Form von Kämmen oder Leitern ausgeführt sein. Auch Ausführungen in Form von überlagerten "H"s und doppet-"T"s bzw. "I"s sind vorteilhaft. Die Elektrodenstruktur befindet sich vorteilhaft auf nur einer Seite des mesogenen Mediums, bei Verwendung mindestens eines Substrats bevorzugt zwischen diesem und dem mesogenen Medium. Bevorzugt liegt die Elektrodenstruktur in mindestens zwei unterschiedlichen Ebenen die sich beide auf einer Seite des mesogenen Steuermediums befinden, vor, dies gilt insbesondere wenn die Elektrodenstruktur überlappende Teilstrukturen enthält. Diese Teilstrukturen werden vorteilhafter Weise durch eine dielektrische Schicht voneinander getrennt. Wenn sich die Teilstrukturen auf den gegenüberliegenden Seiten einer Isolationsschicht befinden kann ein "lay out" gewählt werden, das die Realisierung von Kondensatoren erlaubt. Dies ist insbesondere bei der Ansteuerung von Anzeigen mittels einer aktiven Matrix vorteilhaft. Derartige aktiv Matrix Anzeigen verwenden eine Matrix von den einzelnen Lichtsteuerelementen zugeordneten Ansteuerelementen mit einer nichtlinearen Strom-Spannungs-Kennlinie, wie z. B. TFTs oder MIM- (Englisch: "metal insulator metal") Dioden.

Ein weiterer Aspekt der vorliegenden Erfindung besteht in der Ausgestaltung der Elektrodenstruktur der erfindungsgemäßen elektro-optischen Schaltelemente. Hierbei sind verschiedene Ausführungsformen möglich. Im folgenden werden die bevorzugten Ausführungsformen den Elektroden der erfindungsgemäßen Lichtsteuerelemente gegebenenfalls unter Hinzuziehung der entsprechenden Abbildungen beschrieben.

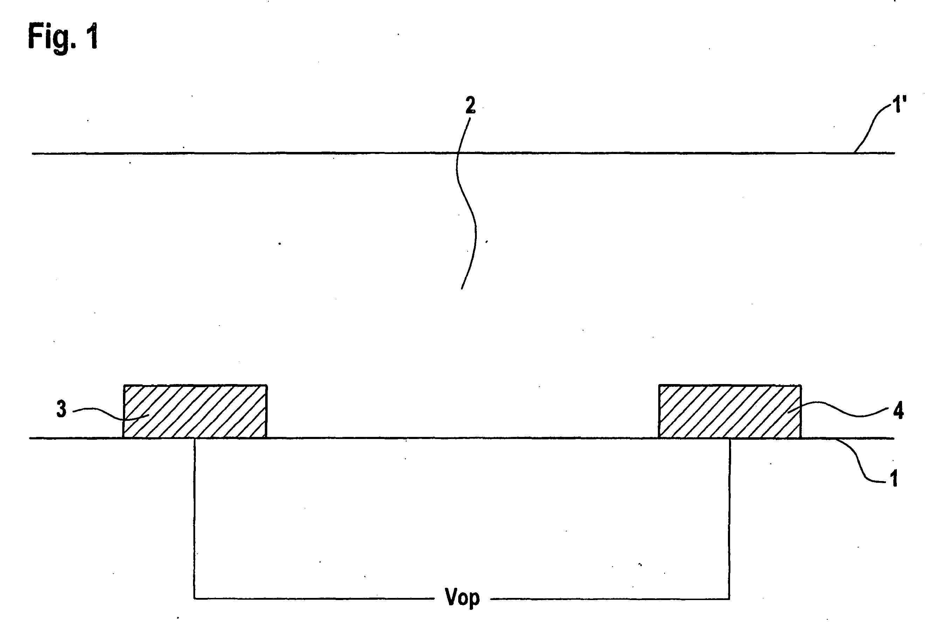

Der Aufbau von Lichtsteuerelementen mit einem mesogenen Steuermaterial wird hier kurz anhand der Abbildung 1 verdeutlicht.

Die Abbildung zeigt schematisch im Querschnitt den Aufbau eines solchen Schaltelements oder eines Teils eines solchen Schaltelements. Zwischen den inneren Oberflächen der Substrate (1) und (1') befindet sich das Steuermedium (2). Auf der inneren Oberfläche des einen Substrats (1) befinden sich die beiden Elektroden (3) und (4) der Elektrodenstruktur, die mit voneinander verschiedenen Potentialen beaufschlagt werden können. "Vop" bezeichnet die Spannungs-, Ladungs- bzw. Stromquelle. Die von Vop ausgehenden Linien symbolisieren die elektrischen Zuleitungen zu den Elektroden.

Die Elektroden können aus durchsichtigem Material bestehen, wie z. B. Indiumzinnoxid (ITO). In diesem Fall kann es vorteilhaft und gegebenenfalls nötig sein, einen Teil oder Teile des Lichtsteuerelements mittels einer schwarzen Maske abzudecken. Dies erlaubt Bereiche in denen das elektrische Feld nicht effektiv ist abzuschirmen und so den Kontrast zu verbessern. Die Elektroden können aber auch aus undurchsichtigem Material bestehen, üblicherweise aus Metall, z.B. aus Chrom, Aluminium, Tantal, Kupfer, Silber oder Gold, bevorzugt aus Chrom. In diesem Fall kann der Einsatz einer separaten schwarzen Maske gegebenenfalls entfallen.

Das verwendete elektrische Feld ist bevorzugt ein inhomogenes Feld.

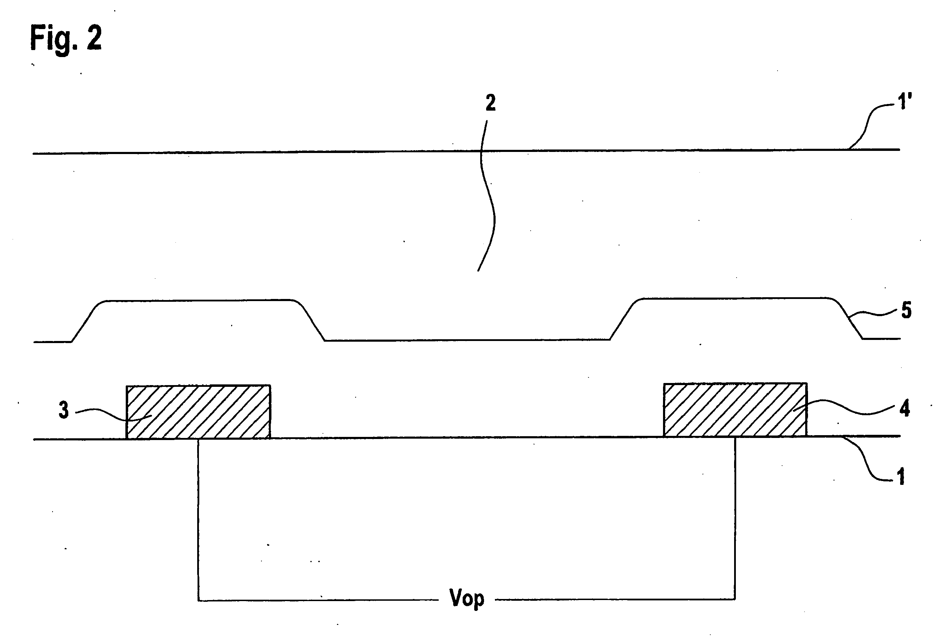

In Abbildung 2 ist schematisch im Querschnitt der Aufbau eines erfindungsgemäßen Schaltelements oder eines Teils eines solchen Schaltelements dargestellt. Zwischen den inneren Oberflächen der Substrate (1) (mit den beiden Elektroden (3) und (4) der Elektrodenstruktur) und (1') befindet sich, wie bei dem in Abbildung 1 dargestellten Schaltelement, das Steuermedium (2). Auf der inneren Oberfläche des einen Substrats (1) oberhalb der Elektroden (3) und (4) befinden sich hier jedoch die feste dielektrische Schicht (5).

Die von Vop ausgehenden Linien symbolisieren wieder die elektrischen Zuleitungen zu den Elektroden.

Im Zusammenhang mit den Anteilen der Flächen der Elektrodenstruktur und der festen dielektrischen Schicht bedeutet
- der wesentliche Teil: bevorzugt 20 % oder mehr, besonders bevorzugt 30 % oder mehr und ganz besonders bevorzugt 40 % oder mehr,
- der überwiegende Teil: bevorzugt 55 % oder mehr, besonders bevorzugt 60 % oder mehr und ganz besonders bevorzugt 70 % oder mehr,
- nahezu gesamt: bevorzugt 80 % oder mehr, besonders bevorzugt 90 % oder mehr und ganz besonders bevorzugt 95 % oder mehr, und
- gesamt: bevorzugt 98 % oder mehr, besonders bevorzugt 99 % oder mehr und ganz besonders bevorzugt 100 %.

Die mesogenen Medien gemäß der vorliegenden Erfindung weisen bevorzugt eine nematische Phase bzw. besonders bevorzugt eine chirale nematische, also eine cholesterische Phase auf. Es können jedoch auch Medien verwendet werden, bei denen der Temperaturbereich der nematischen bzw. cholesterischen Phase so schmal ist, dass praktisch ein Übergang von der kristallinen Phase oder von der bzw. einer smektischen Phase in die optisch isotrope Phase erfolgt. Diese optisch isotrope Phase kann direkt die isotrope Phase sein. Bevorzugt sind aber Medien die mit steigender Temperatur zunächst eine Blaue Phase aufweisen.

Der Klärpunkt der eine nematische Phase aufweisenden mesogenen Medien liegt bevorzugt im Bereich von -20°C bis 80°C, besonders bevorzugt im Bereich von 0°C bis 60°C und ganz besonders bevorzugt im Bereich von 20°C bis 60°C. Bei Anzeigen mit Hintergrundbeleuchtung liegt der Klärpunkt bevorzugt im Bereich von 10°C bis 70°C und besonders bevorzugt im Bereich von 30°C bis 50°C.

Die nematische Phase ist bevorzugt stabil bis -10°C, besonders bevorzugt bis -30°C und ganz besonders bevorzugt bis -40°C,

Die mesogenen Medien gemäß der vorliegenden Erfindung weisen in der nematischen Phase bei einer Temperatur von 4 Grad unter dem Klärpunkt bevorzugt eine Doppelbrechung (Δn) von 0,080 oder mehr auf. Der Wert der Doppelbrechung ist für die erfindungsgemäße Anwendung nahezu unbegrenzt. Praktisch ist er jedoch in der Regel 0,400 oder kleiner, bevorzugt 0,300 oder kleiner und besonders bevorzugt 0,200 oder kleiner. Der Wert der Doppelbrechung der erfindungsgemäßen Medien wird hier in der nematischen Phase bei einer Temperatur von 4° unterhalb des Klärpunkts gemessen.

Ist das Medium bei dieser Temperatur nicht stabil nematisch oder zumindest bis zu dieser Temperatur in der nematischen Phase unterkühlbar, so wird die Doppelbrechung einer Mischung aus 10% des Mediums und 90% der nematischen Mischung ZLI-4792 der Merck KGaA bei 20°C bestimmt und aus der Änderung der Werte gegenüber denen der Wirtsmischung auf den Wert des reinen Mediums extrapoliert. Beträgt die Löslichkeit des Mediums in ZLI-4792 geringer als 10%, wird ausnahmsweise eine 5%-ige Lösung verwendet. Ist die Löslichkeit des Mediums in ZLI-4792 geringer als 5%, wird die nematische Mischung MLC-6828 der Merck KGaA als Wirtsmischung verwendet. Auch hier beträgt die Standardkonzentration 10% und nur wenn die Löslichkeit zur Herstellung der entsprechenden Mischung nicht ausreicht wird eine 5%-ige Lösung verwendet.

Für die Lichtsteuerelemente gemäß der vorliegenden Erfindung können sowohl mesogene Steuermedien verwendet werden, die in der Mesophase eine positive dielektrische Anisotropie (Δε) aufweisen, als auch solche die eine negative dielektrische Anisotropie aufweisen. Bevorzugt werden mesogene Steuermedien verwendet, die in der Mesophase eine positive dielektrische Anisotropie (Δε) aufweisen.

Wenn die mesogenen Steuermedien eine positive dielektrische Anisotropie haben, hat diese bei1 kHz und einer Temperatur von 4° unterhalb des Klärpunkts, bevorzugt in der nematischen Phase, einen Wert von bevorzugt 40 oder mehr. Hat das Medium keine nematische Phase oder liegt es bei einer Temperatur von 4° unterhalb des Klärpunkts nicht in der nematischen Phase vor, so wird seine dielektrische Anisotropie, wie oben bei der Beschreibung der Bestimmung der Doppelbrechung der Medien beschrieben, durch Extrapolation der Werte einer Mischung von 10% bzw. 5% in der Wirtsmischung ZLI-4792 bzw. MLC-6828 ermittelt.

In der vorliegenden Anmeldung gilt, soweit nicht explizit anders angegeben, das Folgende.

Die dielektrische Anisotropie Δε der Verbindungen wird bei 1 kHz und 20°C durch Extrapolation der Werte einer 10%-igen Lösung der jeweiligen Verbindung in einer Wirtsmischung auf einen Anteil der jeweiligen Verbindung von 100% bestimmt. Die Kapazitäten der Testmischungen werden sowohl in einer Zelle mit homeotroper, als auch in einer Zelle mit homogener Randorientierung bestimmt. Die Schichtdicke beider Zellentypen beträgt circa 20 µm. Zur Messung wird eine Rechteckwelle mit einer Frequenz von 1 kHz und einer effektiven Spannung (rms, Englisch: root mean square) von typischer Weise 0,03 V (manchmal auch 0,1 V) bis 1,0 V verwendet. In jedem Fall ist die verwendete Spannung niedriger als die kapazitive Schwelle der jeweils untersuchten Mischung.

Für dielektrisch positive sowie für dielektrisch neutrale Verbindungen wird, wie oben für die Steuermedien beschrieben, die Mischung ZLI-4792 bzw. MLC-6828, für dielektrisch negative Verbindungen, die Mischung ZLI-3086, beide von Merck KGaA, Deutschland, als Wirtsmischung verwendet.

Der Begriff Schwellenspannung bedeutet in der vorliegenden Anmeldung die optische Schwelle und wird für einen relativen Kontrast von 10 % (V₁₀) angegeben. Die Mittgrauspannung und die Sättigungsspannung werden ebenfalls optisch bestimmt und für einen relativen Kontrast von 50%, bzw. von 90 % angegeben. Die kapazitive Schwellenspannung (V₀), auch Freedericksz-Schwelle genannt, angegeben, so wird dies explizit angegeben.

Die angegebenen Bereiche von Werten schließen bevorzugt die Grenzwerte ein.

Die Konzentrationen sind in Massen-% gegeben und beziehen sich auf die vollständige Mischung. Temperaturen sind in Grad Celsius und Temperaturdifferenzen in Differenzgrad Celsius angegeben. Alle physikalischen Eigenschaften wurden bestimmt wie in "Merck Liquid Crystals, Physical Properties of Liquid Crystals", Stand Nov. 1997, Merck KGaA, Deutschland und sind für eine Temperatur von 20 °C angegeben. Die optische Anisotropie (Δn), auch Doppelbrechung genannt, wird bei einer Wellenlänge von 589,3 nm bestimmt. Die dielektrische Anisotropie (Δε) wird bei einer Frequenz von 1 kHz bestimmt.

Im Zusammenhang mit Angaben zur Zusammensetzung der Medien, bzw. ihrer Komponenten, bedeutet
- "enthalten", dass die Konzentration des jeweiligen genannten Materials, also der Komponente oder der Verbindung, in der Bezugseinheit, also dem Medium bzw. der Komponente, bevorzugt 10% oder mehr, besonders bevorzugt 20 % oder mehr und ganz besonders bevorzugt 30% oder mehr beträgt,
- "überwiegend bestehen aus", dass die Konzentration des genannten Materials in der Bezugseinheit bevorzugt 50% oder mehr, besonders bevorzugt 60 % oder mehr und ganz besonders bevorzugt 70% oder mehr beträgt und
- "nahezu vollständig bestehen aus", dass die Konzentration des genannten Materials in der Bezugseinheit bevorzugt 80% oder mehr, besonders bevorzugt 90 % oder mehr und ganz besonders bevorzugt 95% oder mehr beträgt.

Die Klärenthalpie wird mittels "differential scanning calorimetry" bestimmt.

Die "voltage holding rato" wird mit einem kommerziell erhältlichen Meßgerät VHRM-100 der Firma Autronic Melchers, Deutschland bestimmt.

Der Stromfluß durch die Zelle wird mit einem kommerziell erhältlichen Meßgerät LCCS der Firma Autronic Melchers, Deutschland bestimmt.

Die dielektrischen Eigenschaften, elektrooptischen Eigenschaften (z.B. die Schwellenspannungen) und die Schaltzeiten wurden in bei der Merck KGaA, Darmstadt, Deutschland hergestellten Testzellen, bestimmt. Die Testzellen zur Bestimmung von Δε hatten eine Schichtdicke von 22 µm und eine kreisförmige Elektrode aus Indiumzinnoxid (ITO) mit einer Fläche von 1,13 cm² und einem Schutzring. Für homeotrope Orientierung zu Bestimmung von ε|| wurden Zellen mit einer homeotrop orientierenden Polyimid-Orientierungsschicht verwendet. Alternativ kann Lezithin (Merck KGaA) als Orientierungsmittel verwendet. Die Zellen zur Bestimmung von ε⊥ hatten Orientierungsschichten aus dem Polyimid AL-1054 der Firma Japan Synthetic Rubber, Japan. Die Kapazitäten wurden in der Regel mit einem Frequenzanalysator Solatron 1260 mit einer Rechteckwelle mit einer Effektivspannung von 0.3 Vᵣₘₛ gemessen. Die elektrooptischen Untersuchungen wurden mit weißem Licht durchgeführt. Die charakteristischen Spannungen wurden unter senkrechter Beobachtung bestimmt.

Die Dielektrizitätskonstante der Medien in der optisch isotropen Phase wurde bei einer Temperatur von 4° oberhalb der Übergangstemperatur in die optisch isotrope Phase des jeweiligen Mediums bestimmt.

Die Medien wurden in Testzellen mit interdigitalen Elektroden gefüllt. Die Schichtdicke der Testzellen betrug ca. 10 µm. Die Breite der Elektroden betrug 10 µm und der Anstand zwischen den benachbarten Elektroden betrug 10 µm. Die elektrooptische Kennlinie wurde bei verschiedenen Temperaturen oberhalb des Klärpunkts des jeweiligen Mediums bestimmt. Als charakteristischer Wert der Kennlinie wird in der vorliegenden Anmeldung der Wert der Spannung (V₇₀) angegeben, bei der bei einer Temperatur von 2° oberhalb des Klärpunkts des jeweiligen Mediums ein relativer Kontrast von 70% erreicht wird.

In der vorliegenden Anmeldung, besonders in den im folgenden beschriebenen Beispielen werden die Strukturen der chemischen Verbindungen mittels Abkürzungen angegeben. Die Bedeutung der jeweiligen Abkürzungen ist in den folgenden Tabellen A und B zusammengestellt. Alle Gruppen CₙH₂ₙ₊₁ und CₘH₂ₘ₊₁ sind geradkettige Alkylgruppen mit n bzw. m C-Atomen. Tabelle B ist aus sich selbst heraus verständlich, da sie jeweils die vollständige Abkürzung für eine Formel homologer Verbindungen angibt. In Tabelle A sind nur die Abkürzungen für die Kernstrukturen der Verbindungstypen zusammengestellt. Die Abkürzungen für die jeweiligen einzelnen Verbindungen setzen sich aus der jeweils zutreffenden dieser Abkürzungen für den Kern der Verbindung und der mittels einem Bindestrich angehängten Abkürzung für'die Gruppen R¹, R², L¹ und L² gemäß folgender Tabelle zusammen.

| Abkürzung für R¹, R², L¹, L² | R1 | R2 | L¹ | L² |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nN.F.F | CₙH₂ₙ₊₁ | CN | F | F |
| nON.F.F | OCₙH₂ₙ₊₁ | CN | F | F |
| nOF | OCₙH₂ₙ₊₁ | F | H | H |
| nCl | CₙH₂ₙ₊₁ | CI | H | H |
| nCLF | CₙH₂ₙ₊₁ | CI | H | F |
| nCl.F.F | CₙH₂ₙ₊₁ | CI | F | F |
| nF | CₙH₂ₙ₊₁ | F | H | H |
| nF.F | CₙH₂ₙ₊₁ | F | H | F |
| nF.F.F | CₙH₂ₙ₊₁ | F | F | F |
| nmF | CₙH₂ₙ₊₁ | CₘH₂ₘ₊₁ | F | H |
| nCF₃ | CₙH₂ₙ₊₁ | CF₃ | H | H |
| nOCF₃ | CₙH₂ₙ₊₁ | OCF₃ | H | H |
| nOCF₃.F | CₙH₂ₙ₊₁ | OCF₃ | H | F |
| nOCF₃.F.F | CₙH₂ₙ₊₁ | OCF₃ | F | F |
| nOCF₂ | CₙH₂ₙ₊₁ | OCHF₂ | H | H |
| nOCF₂.F | CₙH₂ₙ₊₁ | OCHF₂ | H | F |
| nOCF₂.F.F | CₙH₂ₙ₊₁ | OCHF₂ | F | F |
| nS | CₙH₂ₙ₊₁ | NCS | H | H |
| nS.F | CₙH₂ₙ₊₁ | NCS | H | F |
| nS.F.F | CₙH₂ₙ₊₁ | NCS | F | F |
| rVsN | CᵣH₂ᵣ₊₁-CH=CH-CₛH₂ₛ- | CN | H | H |
| rOsN | CᵣH₂ᵣ₊₁-O-CₛH₂ₛ- | CN | H | H |
| nAm | CₙH₂ₙ₊₁ | COOCₘH₂ₘ₊₁ | H | H |

**Table A:**

| | |
|---|---|
| 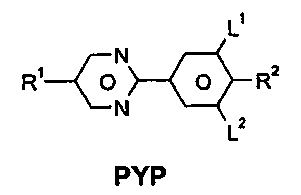 | 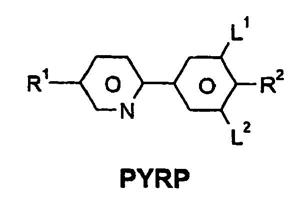 |
| 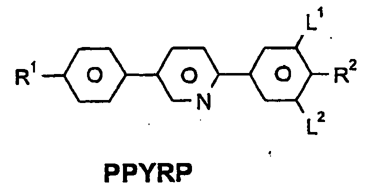 | |
| 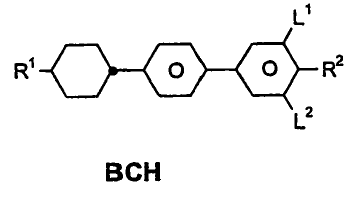 | 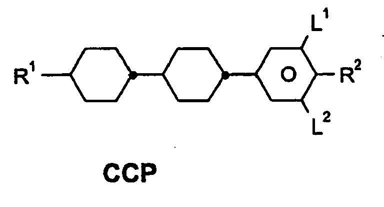 |
| 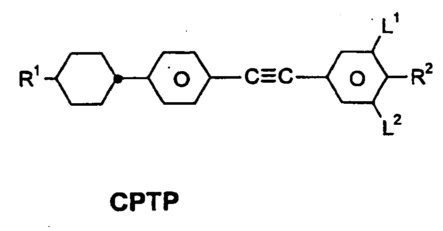 | |
| 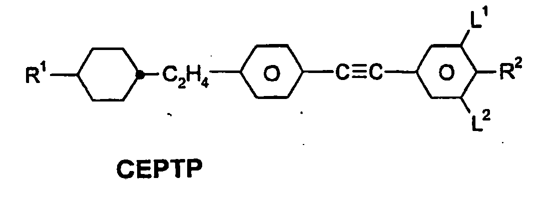 | |
| 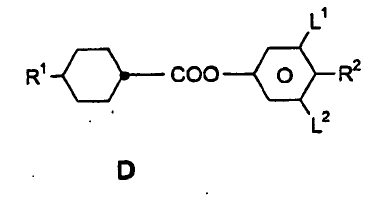 | |

| | |
|---|---|
| 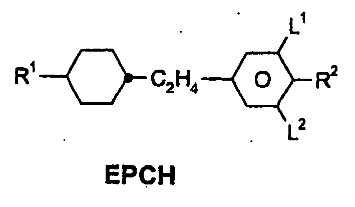 | |
| 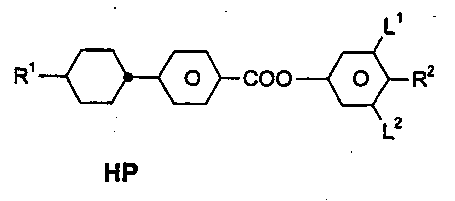 | 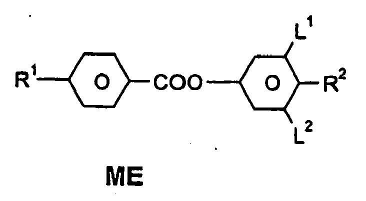 |
| 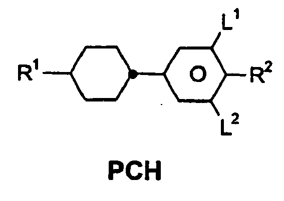 | 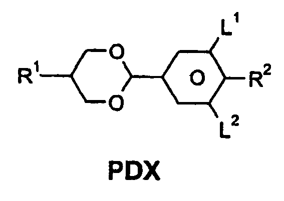 |
| 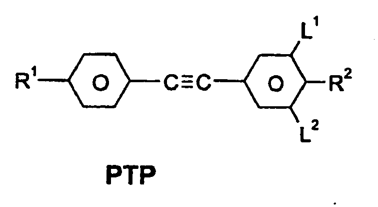 | 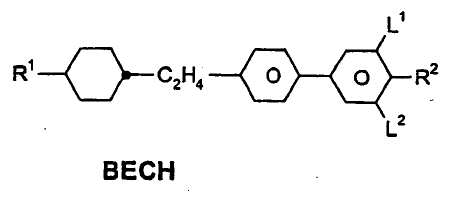 |
| 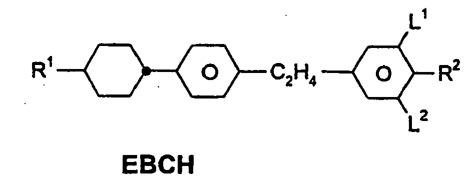 | |
| 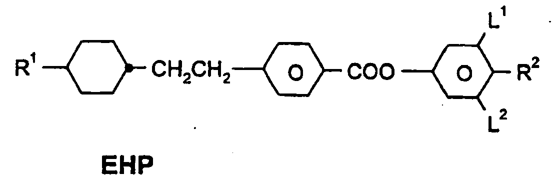 | |

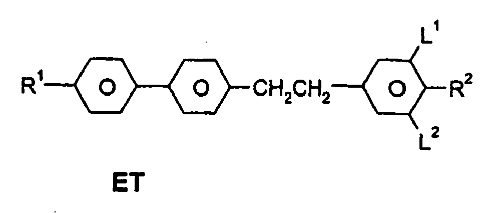

**Table B:**

| | |
|---|---|
| 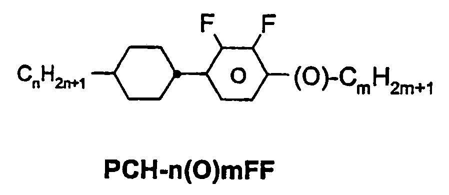 | 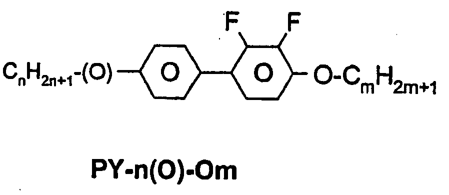 |
| 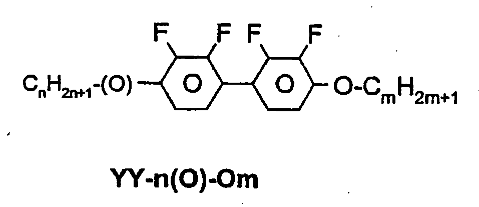 | |
| 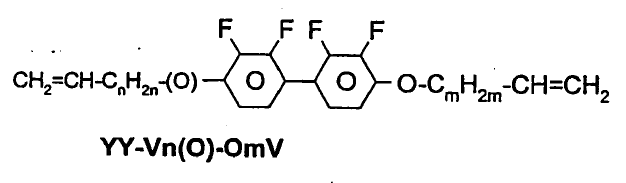 | |
| 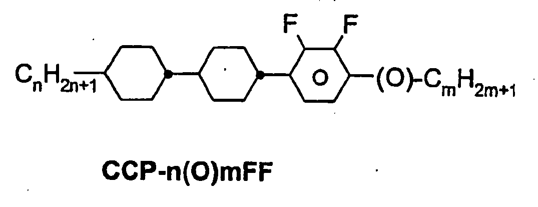 | |
| 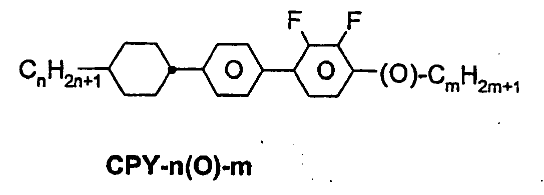 | |
| 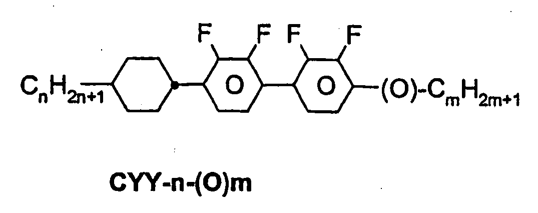 | |
| 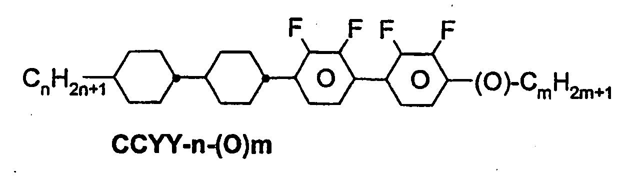 | |
| 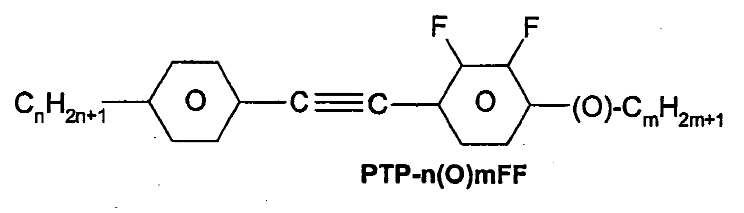 | |
| 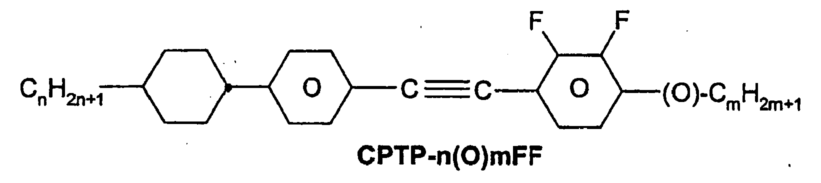 | |
| 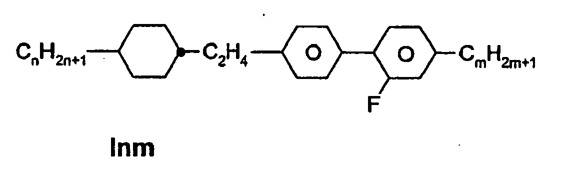 | |
| 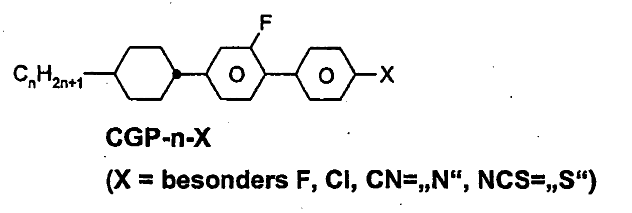 | |
| 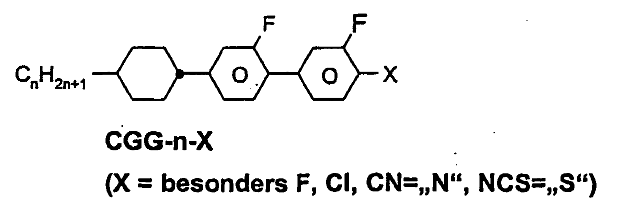 | |
| 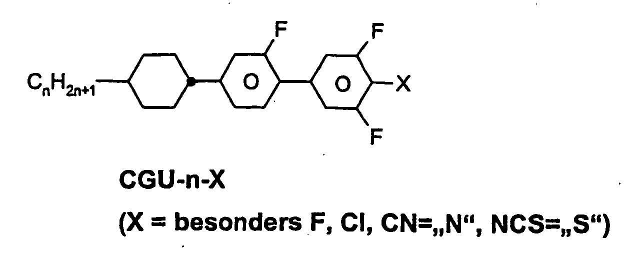 | |
| 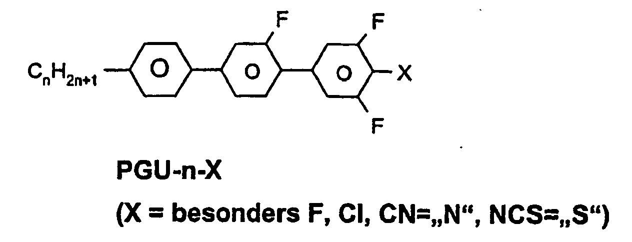 | |
| 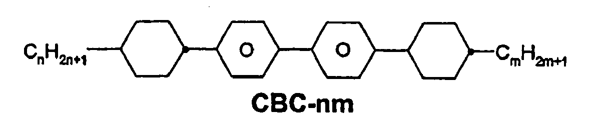 | |
| 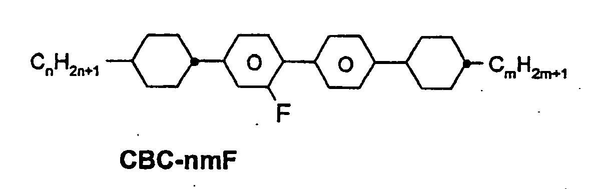 | |
| 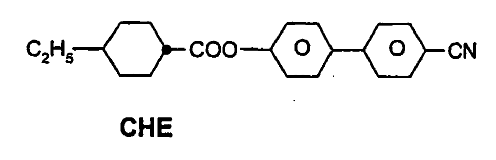 | |
| 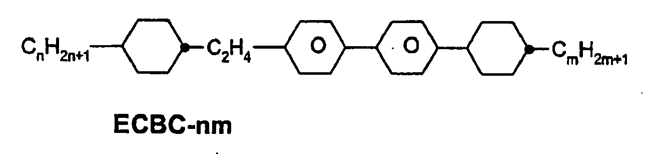 | |
| 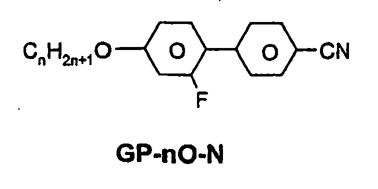 | |
| 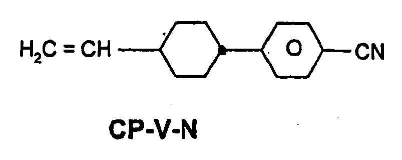 | |
| 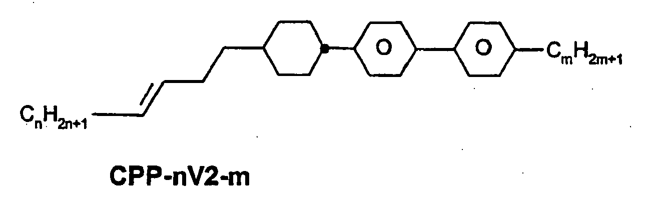 | |
| 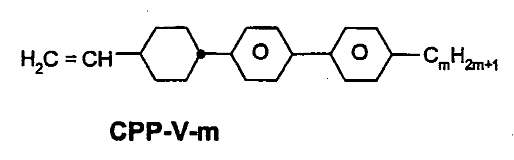 | |
| 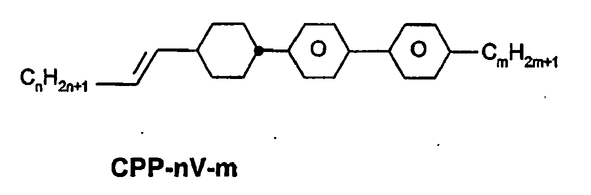 | |
| 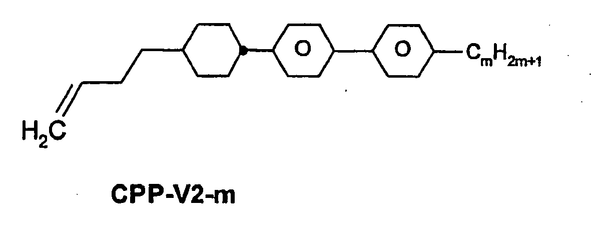 | |
| 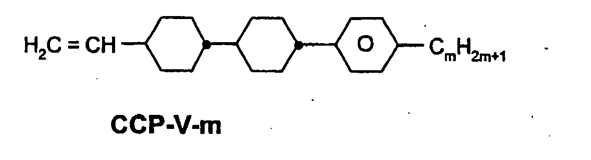 | |
| 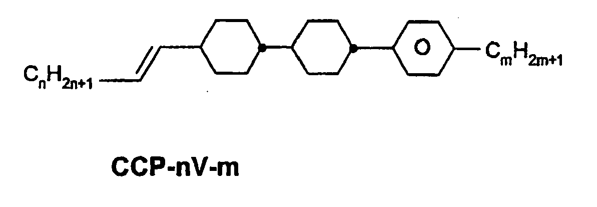 | |
| 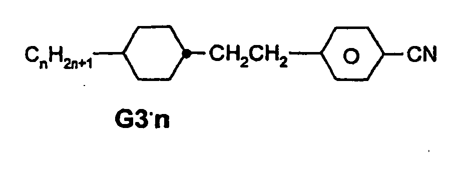 | |
| 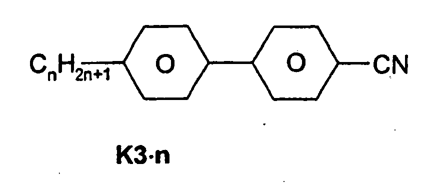 | |
| 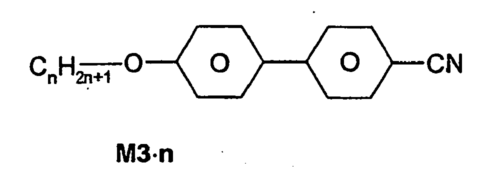 | |
| 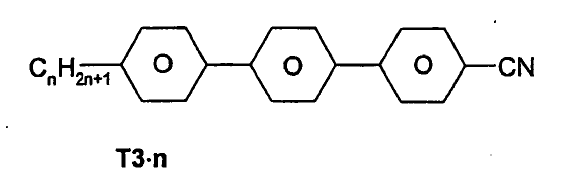 | |
| 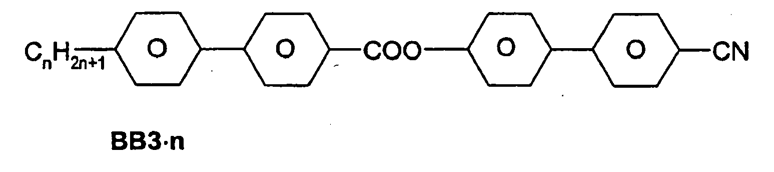 | |
| 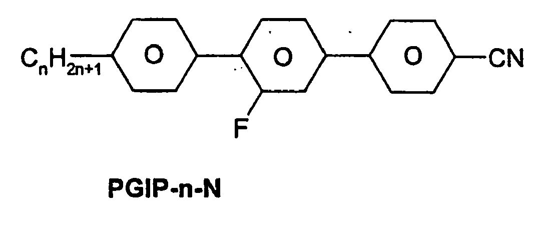 | |
| 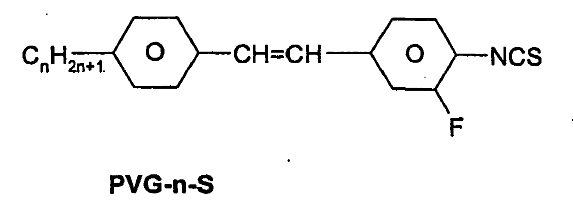 | |
| 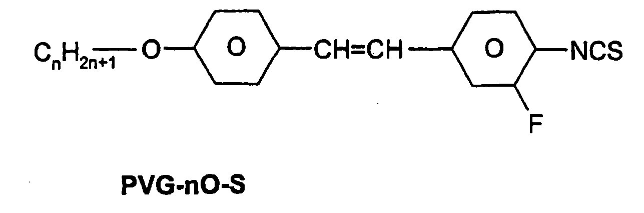 | |
| 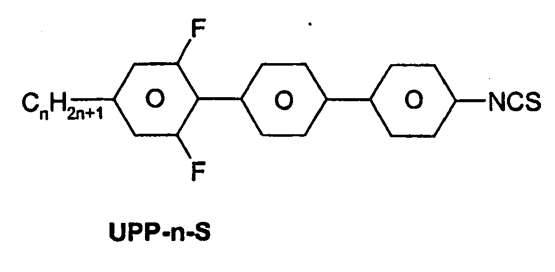 | |
| 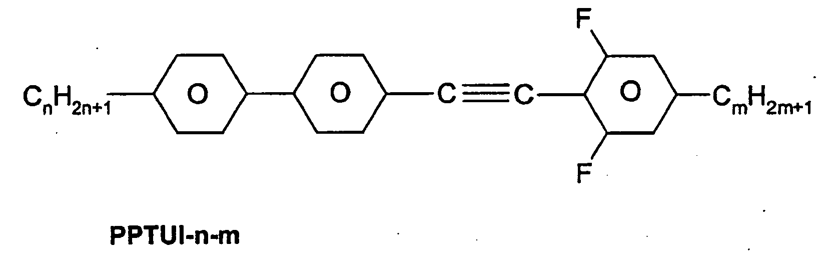 | |
| 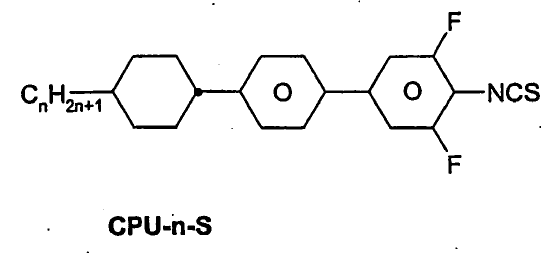 | |
| 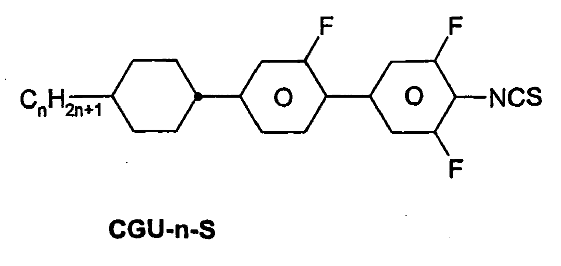 | |
| 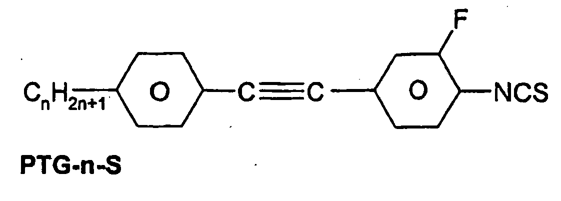 | |
| 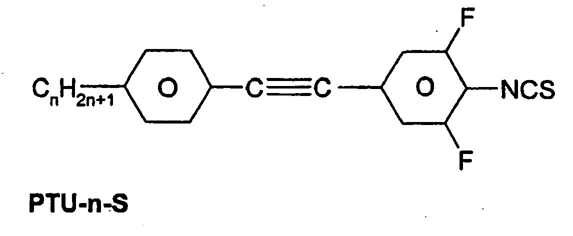 | |
| 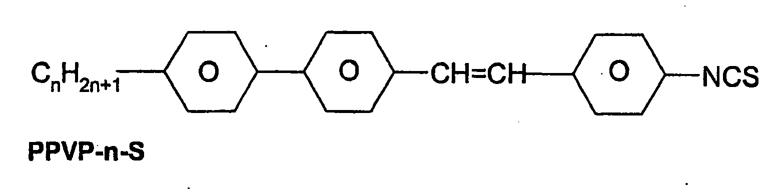 | |
| 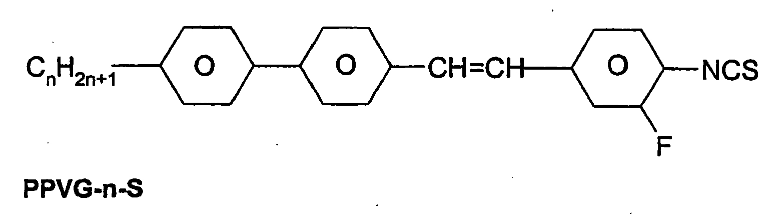 | |
| 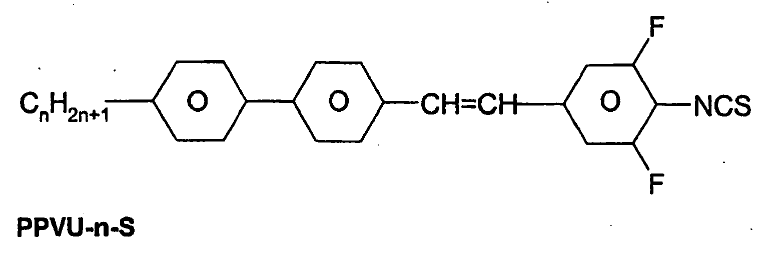 | |
| 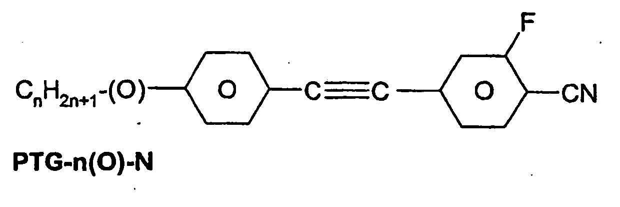 | |
| 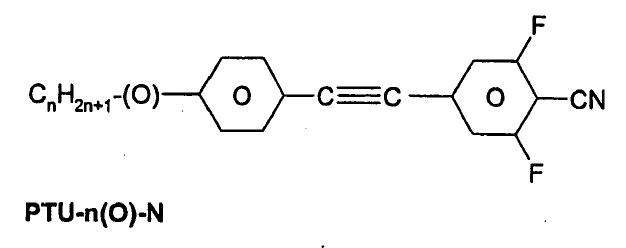 | |
| 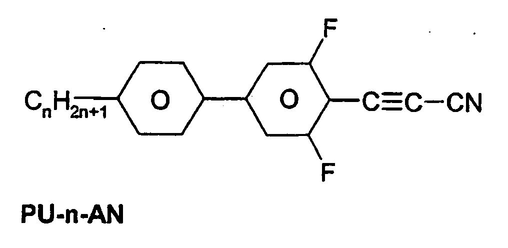 | |
| 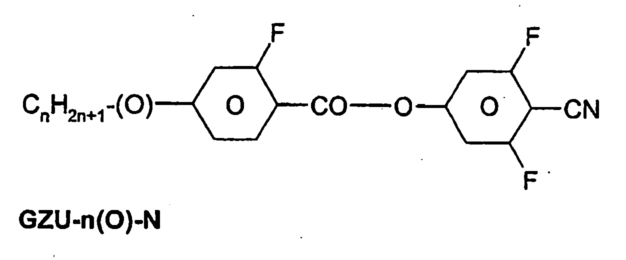 | |
| 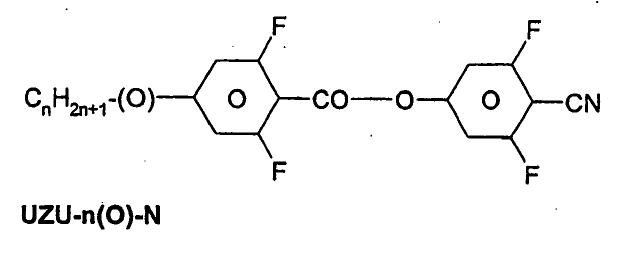 | |
| 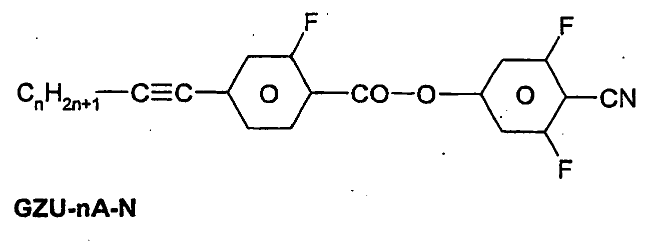 | |
| 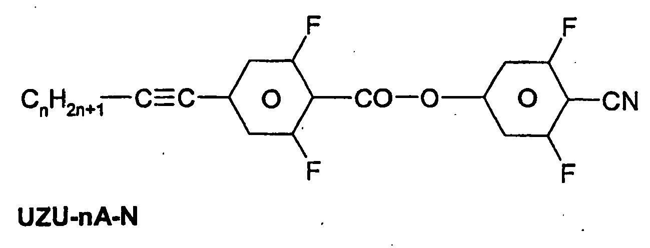 | |
| 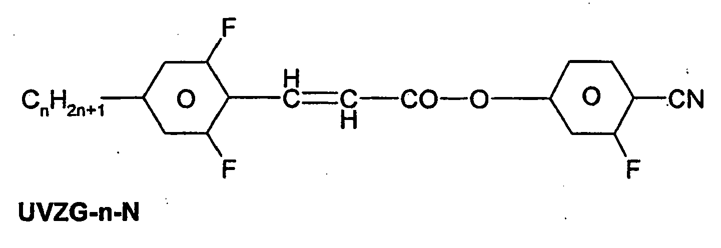 | |
| 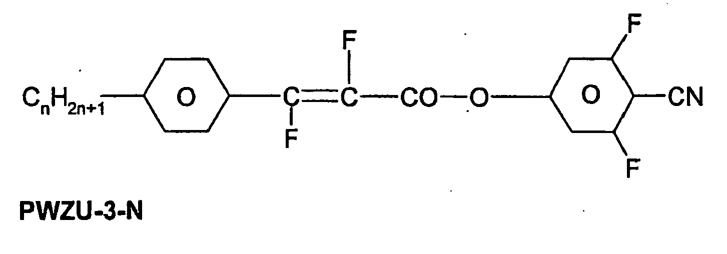 | |
| 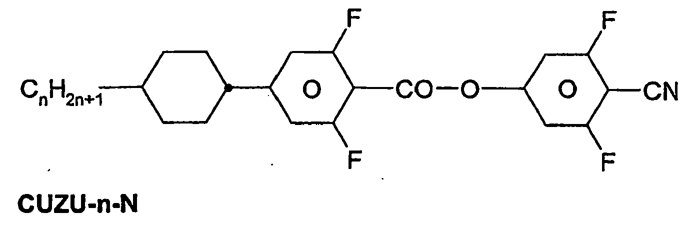 | |
| 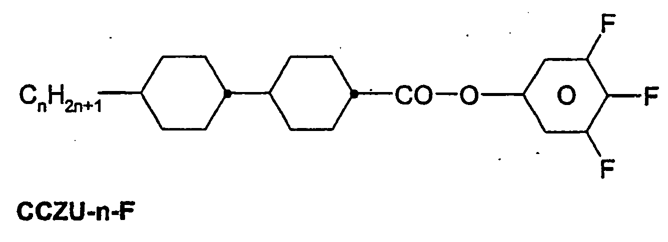 | |
| 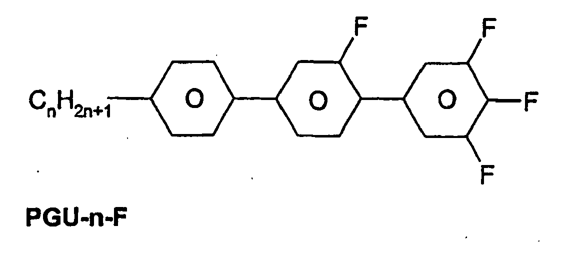 | |
| 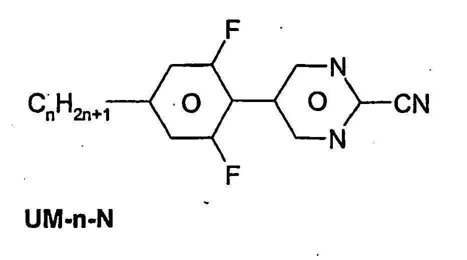 | |
| 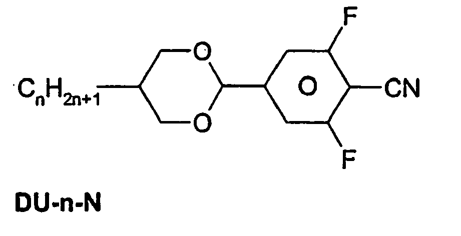 | |
| 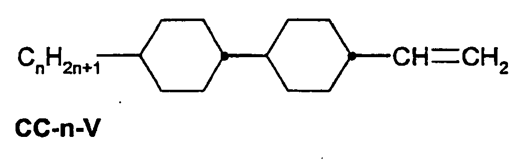 | |
| 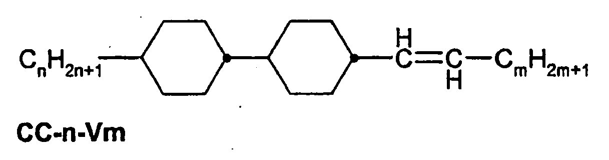 | |

Die mesogenen Medien gemäß der vorliegenden Anmeldung enthalten bevorzugt
- vier oder mehr, bevorzugt sechs oder mehr, Verbindungen ausgewählt aus der Gruppe der Verbindungen der Tabellen A und B und/oder
- fünf oder mehr Verbindungen ausgewählt aus der Gruppe der Verbindungen der Tabelle B und/oder
- zwei oder mehr Verbindungen ausgewählt aus der Gruppe der Verbindungen der Tabelle A.

### Beispiele

Die im Folgenden beschriebenen Beispiele illustrieren die vorliegende Erfindung ohne sie in irgend einer Art zu beschränken. Ferner zeigen sie dem Fachmann welche Eigenschaften und insbesondere welche Eigenschaftskombinationen mit der vorliegenden Erfindung erreicht werden können.

### Vergleichsbeispiel

Die Flüssigkristallmischung mit der folgenden Zusammensetzung wird hergestellt und untersucht.

| Zusammensetzung | | Physikalische Eigenschaften | |
|---|---|---|---|
| Verbindung | Konz. | T(N,I) | = 22,5 °C |
| # Abkürzung | /Massen-% | T(N,I)-4° | = 18,5 °C |
| 1 UZU-3A-N | 15,0 | Δn(18,5°C, 589,3 nm) | = 0,0986 |
| 2 UZU-5A-N | 5,6 | T(N,I)+4° | = 26,5 °C |
| 3 GZU-3A-N | 15,0 | ε_{av.}(T(N,I)+4°C,1kHz) | = 60,8 |
| 4 GZU-4A-N | 15,0 | | |
| 5 GZU-4O-N | 12,0 | ΔH(N,I) | = 572 J/kg |
| 6 CUZU-2-N | 11,0 | | |
| 7 CUZU-3-N | 11,0 | T_{C}(N,I)° | = 23,0 °C |
| 8 CUZU-4-N | 11,0 | T_{C}(N,I)+2° | = 25,0 °C |
| 9 HP-3N.F | 4,4 | V₁₀(T(N,I)+2°C,1kHz) | = 33 V |
| Σ | 100,0 | V₇₀((N,I)+2°C,1kHz) | = 48 V |

Diese Flüssigkristallmischung wird mit 0,1% des Phenols der Formel 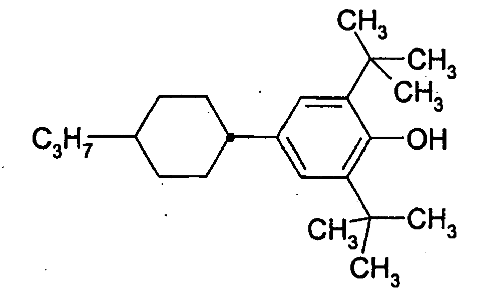 versetzt und in eine Testzelle mit interdigitalen Elektroden, ohne Beschichtung gefüllt. Der Klärpunkt in der Zelle (T_{C}(N,I)) betrug 23,0°C. Die Zelle wurde bei einer Temperatur von 2° oberhalb dieses Klärpunkts, also bei einer Temperatur von 25,0°C bezüglich ihrer elektrooptischen Eigenschaften untersucht. Anschließend wird ihre Stabilität untersucht. Hierzu wird die "voltage holding ratio" bei Umgebungstemperatur von ca. 20°C und der Stromfluß durch die Zelle gemessen.

Die verwendete Testzelle wies interdigitale Elektroden auf nur einem der beiden Substrate auf. Eine elektrooptische Testzelle mit einem Lichtschaltelement enthaltend die Flüssigkristallmischung wurde hergestellt. Die Substrate bestanden aus Glas. Es wurden Substrate ohne Orientierungsschicht und ohne Passivierungsschicht verwendet. Die Elektrodenstruktur bestand aus ineinander verzahnten kammförmigen Elektroden. Der Abstand der Elektroden voneinander betrug 10 µm und die Breite der Elektroden betrug 10 µm. Die Schichtdicke der Elektroden betrug ca. 100 nm. Die Elektroden befanden sich alle in einer gemeinsamen Ebene. Die Schichtdicke des Steuermediums betrug ca. 10,0 µm.

Es wurde ein erster Polarisator vor und als Analysator ein zweiter Polarisator hinter der Zelle benutzt. Die Absorptionsachsen der beiden Polarisatoren bildeten einen Winkel von 90° zueinander. Der Winkel zwischen der Achse der maximalen Absorption der Polarisatoren und der Komponente des elektrischen Felds in der Ebene der Anzeige betrug jeweils 45°. Die Spannungs-Transmissions-Kennlinie wurde mit einem elektrooptischen Messplatz DMS 703 der Firma Autronic-Melchers, Karlsruhe, Deutschland bestimmt. Die Betriebstemperatur betrug 25,0°C. Bei senkrechter Beobachtung wurde eine Kurve erhalten wie sie für eine Zelle mit elektrisch kontrollierter Doppelbrechung (z. B. ECB) typisch ist. Diese Ergebnisse sind auch in der folgenden Tabelle (Tabelle 1) zusammengestellt.

Die "voltage holding ratio" und der Stromfluß durch die Zelle wird bei Umgebungstemperatur von ca. 20°C bestimmt. Hierbei werden jeweils drei Testzellen untersucht und die erhaltenen Ergebnisse gemittelt. Die Ergebnisse sind ebenfalls in der Tabelle 1 zusammengestellt.

**Tabelle 1: Eigenschaften der Schaltelemente**

| | | |
|---|---|---|
| Beispiel: | Vergleich | 1 |

| Elektrodenstruktur | | |
|---|---|---|
| Abstand /µm | 10 | 10 |
| Breite /µm | 10 | 10 |
| Passivierungsschicht | Nein | Ja |
| Kennlinie bei 25,0°C | | |

| Relativer Kontrast / % | Spannung / V | |
|---|---|---|
| 0 | 0 | 0 |
| 10 | 33 | 55 |
| 70 | 48 | 98 |

| Elektrische Eigenschaften bei 20°C | | |
|---|---|---|
| Voltage holding ratio / % | 90,8 | 95,9 |
| (1-Voltage holding ratio) / % | 9,2 | 4,1 |
| Strom / µA | 1,61 | 0,30 |

### Beispiel

Die Mischung des Vergleichsbeispiels mit 0,1 % des dort verwendeten Phenols wird in eine Testzelle gemäß der Lehre der vorliegenden Anmeldung gefüllt und, wie bei dem Vergleichsbeispiel beschrieben, ihre elektrooptischen Eigenschaften bei einer Temperatur von 25,0°C, ihre "voltage holding ratio" und ihre Stromaufnahme bei einer Temperatur von 20°C bestimmt. Die Testzelle hat den selben Aufbau und die selbe Elektrodenstruktur wie die im Vergleichsbeispiel verwendete, jedoch ist hier die Elektrodenstruktur mit einer ca. 200 nm dicken Schicht aus SiO₂ bedeckt. Diese Passivierungsschicht bedeckt die gesamte Elektrodenstruktur inklusive der Elektrodenzwischenräume. Wie bei dem Vergleichsbeispiel werden jeweils drei Testzellen untersucht und die Mittelwerte der Ergebnisse angegeben.

Die so erhaltene Zelle erreichte bei einer Spannung von 55 V 10 % relativen Kontrast und bei 98 V 70 % relativen Kontrast.

Diese Ergebnisse sind in Tabelle 1 denen des Vergleichsbeispiels gegenübergestellt. Wie man aus dieser Tabelle ersehen kann, sind die charakteristischen Spannungen des Flüssigkristallschaltelements des Beispiels 1 gegenüber denen des Vergleichsbeispiels ca. zweifach erhöht. Gleichzeitig ist jedoch der Spannungsverlust (1-"voltage holding ratio") jedoch um mehr als die Hälfte und die Stromaufnahme auf weniger als ein Fünftel verringert.

### Beschreibung der Abbildungen

Abbildung 1: Die Abbildung zeigt schematisch im Querschnitt den Aufbau eines Schaltelements oder eines Teils eines Schaltelements mit interdigitalen Elektroden. Zwischen den inneren Oberflächen der Substrate (1) und (1') befindet sich das Steuermedium (2). Auf der inneren Oberfläche des einen Substrats (1) befinden sich die beiden Elektroden (3) und (4) der Elektrodenstruktur, die mit voneinander verschiedenen Potentialen beaufschlagt werden können. Vop bezeichnet die Spannungs-, Ladungs- bzw. Stromquelle. Die von Vop ausgehenden Linien symbolisieren die elektrischen Zuleitungen zu den Elektroden.

Abbildung 2 zeigt schematisch im Querschnitt den Aufbau eines Schaltelements oder eines Teils eines Schaltelements gemäß der Lehre der vorliegenden Anmeldung. Die Elektroden sind ähnlich gestaltet wie bei der in Abbildung 1 gezeigten Ausführungsform. Die Elektroden (3) und (4) sind jedoch mit einer festen dielektrischen Schicht (5) bedeckt. Diese Schicht besteht aus SiO₂ und hat eine Dicke von ca. 200 nm. Die Elektroden (3) und (4) bestehen aus Chrom und haben eine Dicke von ca. 100 nm. Die von Vop ausgehenden Linien symbolisieren, wie in Abbildung 1, die elektrischen Zuleitungen zu den Elektroden.

### Liste der Bedeutung der Bezugszeichen der Abbildungen:

- 1: : Oberfläche des ersten Substrats,
- 1': : Oberfläche des 2. Substrats,
- 2: : Steuerschicht,
- 3: : Leitfähige Schicht der Elektrodenstruktur, die mit dem 1. Potential beaufschlagt werden kann,
- 4: : Leitfähige Schicht der Elektrodenstruktur, die mit dem 2. Potential beaufschlagt werden kann,
- 5: : Feste dielektrische Schicht.

- Vop :: Spannungs-, Ladungs- bzw. Stromquelle

## Patentansprüche

1. Elektrooptisches Lichtsteuerelement umfassend
- ein Substrat (1) oder mehrere Substrate (1 und 1'),
- eine Elektrodenanordnung (3 und 4),
- mindestens ein Element oder mehrere Elemente zur Polarisation des Lichts und
- ein mesogenes Steuermedium (2), das als Schicht ausgebildet ist,
- wobei die Elektrodenanordnung (3 und 4) ein elektrisches Feld mit einer signifikanten Komponente parallel zur Fläche des mesogenen Steuermediums (2) erzeugen kann, wobei
- das Steuermedium (2) bei der Betriebstemperatur des Lichtsteuerelements im nicht angesteuerten Zustand eine optisch isotrope Phase aufweist, **dadurch gekennzeichnet, dass**
- das Lichtsteuerelement eine feste dielektrische Schicht (5) zwischen der Elektrodenanordnung (3 und 4) und der mesogenen Steuerschicht (2) umfaßt.

2. Lichtsteuerelement nach Anspruch 1, **dadurch gekennzeichnet, dass**
- die feste dielektrische Schicht (5) aus SiO₂, SiO_{X}. Siliziumnitrid oder Siliziumkarbid besteht.

3. Lichtsteuerelement nach Anspruch 1 oder 2, **dadurch gekennzeichnet, dass**
- die feste dielektrische Schicht (5) die Elektrodenstruktur (3 und 4) mindestens teilweise bedeckt.

4. Lichtsteuerelement nach Anspruch 3, **dadurch gekennzeichnet, dass**
- die feste dielektrische Schicht (5) die Ecken und/oder Kanten der Elektrodenstruktur (3 und 4) im wesentlichen vollständig bedeckt.

5. Lichtsteuerelement nach Anspruch 3, **dadurch gekennzeichnet, dass**
- die feste dielektrische Schicht (5) die Elektrodenstruktur (3 und 4) im wesentlichen vollständig bedeckt.

6. Lichtsteuerelement nach mindestens einem der Ansprüche 3 bis 5, **dadurch gekennzeichnet, dass**
- die feste dielektrische Schicht (5) eine Dicke von 90 % oder weniger der Schichtdicke der mesogenen Steuerschicht (2) aufweist.

7. Lichtsteuerelement nach mindestens einem der Ansprüche 1 bis 6, **dadurch gekennzeichnet, dass**
- das Steuermedium (2) bei der Betriebstemperatur des Lichtsteuerelements eine Blaue Phase aufweist.

8. Elektrooptische Anzeige enthaltend ein oder mehrere Lichtsteuerelemente nach mindestens einem der Ansprüche 1 bis 7.

9. Elektrooptische Anzeige nach Anspruch 8, **dadurch gekennzeichnet, dass** die Anzeige mittels einer aktiven Matrix angesteuert wird.

10. Elektrooptisches Anzeigesystem enthaltend eine oder mehrere elektrooptische Anzeigen nach Anspruch 8 oder 9.

11. Elektrooptisches Anzeigesystem nach Anspruch 10, **dadurch gekennzeichnet, dass** es als Fernsehbildschirm, als Computermonitor oder als beides verwendet wird oder verwendet werden kann.

12. Verwendung eines Lichtsteuerelements nach mindestens einem der Ansprüche 1 bis 7 zur Darstellung von Information.

13. Verwendung eines Lichtsteuerelements nach mindestens einem der Ansprüche 1 bis 7 in einer elektrooptischen Anzeige.

14. Verwendung einer elektrooptischen Anzeige nach Anspruch 8 oder 9 in einem elektrooptischen Anzeigesystem.

15. Verwendung eines elektrooptischen Anzeigesystems nach Anspruch 10 oder 11 zur Darstellung von Videosignalen oder von digitalen Signalen.

## Claims

1. Electro-optical light modulation element comprising
- a substrate (1) or a plurality of substrates (1 and 1'),
- an electrode arrangement (3 and 4),
- at least one element or a plurality of elements for polarisation of the light and
- a mesogenic modulation medium (2) which is formed as a layer,
- where the electrode arrangement (3 and 4) is able to generate an electric field having a significant component parallel to the surface of the mesogenic modulation medium (2), where
- the modulation medium (2) has an optically isotropic phase in the unaddressed state at the operating temperature of the light modulation element, **characterised in that**
- the light modulation element includes a solid dielectric layer (5) between the electrode arrangement (3 and 4) and the mesogenic modulation layer (2).

2. Light modulation element according to Claim 1, **characterised in that**
- the solid dielectric layer (5) consists of SiO₂, SiO_{X}, silicon nitride or silicon carbide.

3. Light modulation element according to Claim 1 or 2, **characterised in that**
- the solid dielectric layer (5) at least partly covers the electrode structure (3 and 4).

4. Light modulation element according to Claim 3, **characterised in that**
- the solid dielectric layer (5) essentially completely covers the corners and/or edges of the electrode structure (3 and 4).

5. Light modulation element according to Claim 3, **characterised in that**
- the solid dielectric layer (5) essentially completely covers the electrode structure (3 and 4).

6. Light modulation element according at least to one of Claims 3 to 5, **characterised in that**
- the solid dielectric layer (5) has a thickness of 90% or less of the layer thickness of the mesogenic modulation layer (2).

7. Light modulation element according at least to one of Claims 1 to 6, **characterised in that**
- the modulation medium (2) has a blue phase at the operating temperature of the light modulation element.

8. Electro-optical display containing one or more light modulation elements according at least to one of Claims 1 to 7.

9. Electro-optical display according to Claim 8, **characterised in that** the display is addressed by means of an active matrix.

10. Electro-optical display system containing one or more electro-optical displays according to Claim 8 or 9.

11. Electro-optical display system according to Claim 10, **characterised in that** it is used or can be used as a television screen, as a computer monitor or as both.

12. Use of a light modulation element according at least to one of Claims 1 to 7 for the display of information.

13. Use of a light modulation element according at least to one of Claims 1 to 7 in an electro-optical display.

14. Use of an electro-optical display according to Claim 8 or 9 in an electro-optical display system.

15. Use of an electro-optical display system according to Claim 10 or 11 for the display of video signals or digital signals.

## Revendications

1. Elément de modulation de lumière électro-optique comprenant
- un substrat (1) ou une pluralité de substrats (1 et 1'),
- un agencement d'électrodes (3 et 4),
- au moins un élément ou une pluralité d'éléments pour la polarisation de la lumière et
- un milieu de modulation mésogène (2) qui est formé en tant que couche,
- dans lequel l'agencement d'électrodes (3 et 4) peut générer un champ électrique présentant une composante significative parallèle à la surface du milieu de modulation mésogène (2), dans lequel
- le milieu de modulation (2) présente une phase optiquement isotrope dans l'état sous-adressé à la température de fonctionnement de l'élément de modulation de lumière, **caractérisé en ce que**
- l'élément de modulation de lumière inclut une couche diélectrique solide (5) entre l'agencement d'électrodes (3 et 4) et la couche de modulation mésogène (2).

2. Elément de modulation de lumière selon la revendication 1, **caractérisé en ce que**
- la couche diélectrique solide (5) est constituée par SiO₂, SiOₓ, nitrure de silicium ou carbure de silicium.

3. Elément de modulation de lumière selon la revendication 1 ou 2,
**caractérisé en ce que**
- la couche diélectrique solide (5) recouvre au moins partiellement la structure d'électrodes (3 et 4).

4. Elément de modulation de lumière selon la revendication 3, **caractérisé en ce que**
- la couche diélectrique solide (5) recouvre essentiellement complètement les coins et/ou les bords de la structure d'électrodes (3 et 4).

5. Elément de modulation de lumière selon la revendication 3, **caractérisé en ce que**
- la couche diélectrique solide (5) recouvre essentiellement complètement la structure d'électrodes (3 et 4).

6. Elément de modulation de lumière selon au moins l'une des revendications 3 à 5, **caractérisé en ce que**
- la couche diélectrique solide (5) présente une épaisseur de 90% ou moins de l'épaisseur de couche de la couche de modulation mésogène (2).

7. Elément de modulation de lumière selon au moins l'une des revendications 1 à 6, **caractérisé en ce que**
- le milieu de modulation (2) présente une phase bleue à la température de fonctionnement de l'élément de modulation de lumière.

8. Affichage électro-optique contenant un ou plusieurs éléments de modulation de lumière selon au moins l'une des revendications 1 à 7.

9. Affichage électro-optique selon la revendication 8, **caractérisé en ce que** l'affichage est adressé au moyen d'une matrice active.

10. Système d'affichage électro-optique contenant un ou plusieurs affichages électro-optiques selon la revendication 8 ou 9.

11. Système d'affichage électro-optique selon la revendication 10, **caractérisé en ce qu'**il est utilisé ou peut être utilisé en tant qu'écran de télévision, en tant que moniteur ou en tant que les deux.

12. Utilisation d'un élément de modulation de lumière selon au moins l'une des revendications 1 à 7 pour l'affichage d'information.

13. Utilisation d'un élément de modulation de lumière selon au moins l'une des revendications 1 à 7 dans un affichage électro-optique.

14. Utilisation d'un affichage électro-optique selon la revendication 8 ou 9 dans un système d'affichage électro-optique.

15. Utilisation d'un système d'affichage électro-optique selon la revendication 10 ou 11 pour l'affichage de signaux vidéo ou de signaux numériques.
